# EUROPEAN PATENT APPLICATION

(11) **EP 4 814 674 A1**
(43) Date of publication of application: **30.09.2026**
(21) Application number: 24901104.0
(22) Date of filing: 05.12.2024
(51) Int. Cl.: G06F 3/04817, G06F 3/04845, G06F 3/0486, G06F 9/451

(54) **ELECTRONIC DEVICE FOR EDITING WIDGET AND METHOD FOR OPERATING SAME**

(30) Priority: 07.12.2023 KR 20230176888; 13.02.2024 KR 20240020441
(71) Applicant: Samsung Electronics Co., Ltd., Suwon-si, Gyeonggi-do 16677 (KR)
(72) Inventor: CHUNG, Jinkyo, Suwon-si Gyeonggi-do 16677 (KR); KWON, Jinhee, Suwon-si Gyeonggi-do 16677 (KR); KIM, Yeojin, Suwon-si Gyeonggi-do 16677 (KR); KIM, Hyun, Suwon-si Gyeonggi-do 16677 (KR); SEO, Seunghyun, Suwon-si Gyeonggi-do 16677 (KR); YANG, Guhyun, Suwon-si Gyeonggi-do 16677 (KR); LEE, Wonjae, Suwon-si Gyeonggi-do 16677 (KR); CHANG, Ilku, Suwon-si Gyeonggi-do 16677 (KR)
(74) Representative: HGF
(86) International application number: PCT/KR2024/019882
(87) International publication number: WO 2025/121918

(57) **Abstract**

According to an embodiment, an electronic device (201) may comprise a touch screen (260), at least one processor (220), and a memory (230) including instructions. According to an embodiment, the instructions, when executed by the at least one processor, may cause the electronic device to identify a first input for editing a first widget corresponding to a first application included in a first screen displayed on the touch screen. According to an embodiment, the instructions, when executed by the at least one processor, may cause the electronic device to display a handler by which the size of the first widget can be adjusted, in response to the first input. According to an embodiment, the instructions, when executed by the at least one processor, may cause the electronic device to display a preview image instead of the first widget, upon identifying a second input regarding the handler, until the second input is released, the preview image corresponding to a size adjusted by the second input. According to an embodiment, the preview image may include a first template layout based on the adjusted size. According to an embodiment, the first template layout may include multiple objects indicating locations at which information related to the first application is to be displayed. According to an embodiment, at least one first object among the multiple objects may be displayed with a fixed size. According to an embodiment, at least one second object among the multiple objects may have a size changed on the basis of the second input.

## Description

### [Technical Field]

The disclosure relates to an electronic device editing a widget and a method of operating the same.

### [Background Art]

An electronic device may provide or display a widget (or widget service) capable of rapidly providing various content such as stocks, weather, a clock, and news on a screen of the electronic device (e.g., a home screen, a lock screen, or a watchface). Such a widget is one of graphic interfaces that more smoothly supports interaction between a user and an application, and through the widget, a user may directly receive desired content on the screen of the electronic device without launching the application to execute the content.

An electronic device may arrange various widgets corresponding to various content on a screen and/or adjust the size of the widget based on a user input. Further, an electronic device may provide content associated with a widget arranged on a screen based on a user input to the widget.

### [Detailed Description of the Invention]

### [Technical Solution]

According to an embodiment, an electronic device 201 may include a touch screen 260, at least one processor 220, and memory 230 storing instructions. According to an embodiment, when executed by the at least one processor, the instructions may cause the electronic device to identify the first input for editing a first widget corresponding to a first application included in a first screen displayed on the touch screen. According to an embodiment, when executed by the at least one processor, the instructions may cause the electronic device to display, in response to the first input, a handler for adjusting a size of the first widget. According to an embodiment, when executed by the at least one processor, the instructions may cause the electronic device to display, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

According to an embodiment, a method of operating an electronic device 201 may include an operation of identifying the first input for editing a first widget corresponding to a first application included in a first screen displayed on a touch screen 260 included in the electronic device. According to an embodiment, the method of operating the electronic device may include an operation of displaying, in response to the first input, a handler for adjusting a size of the first widget. According to an embodiment, the method of operating the electronic device may include an operation of displaying, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

According to an embodiment, a non-transitory recording medium 230 may store instructions executable to perform an operation of identifying the first input for editing a first widget corresponding to a first application included in a first screen displayed on a touch screen 260 included in an electronic device 201, an operation of displaying, in response to the first input, a handler for adjusting a size of the first widget, and an operation of displaying, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

### [Brief Description of Drawings]

FIG. 1 is a block diagram illustrating an electronic device in a network environment according to an embodiment.
FIG. 2 is a block diagram illustrating components of an electronic device, according to an embodiment.
FIG. 3 is a flowchart illustrating operations in which an electronic device adjusts the size of a widget, according to an embodiment.
FIG. 4 is a view illustrating operations in which an electronic device adjusts the size of a widget, according to an embodiment.
FIGS. 5A, 5B, 5C, and 5D are views illustrating a template layout displayed when an electronic device adjusts the size of a widget, according to an embodiment.
FIGS. 6A, 6B, 6C, and 6D are views illustrating a handler displayed when an electronic device adjusts the size of a widget, according to an embodiment.
FIG. 7 is a flowchart illustrating operations in which an electronic device adjusts a widget according to a specified size corresponding to cells on a screen, according to an embodiment.
FIGS. 8A, 8B, 8C, and 8D are views illustrating operations in which an electronic device adjusts a widget according to a specified size corresponding to cells on a screen, according to an embodiment.
FIG. 9 is a flowchart illustrating operations in which an electronic device adjusts a widget according to a specified size corresponding to cells on a screen, according to an embodiment.
FIG. 10 is a view illustrating operations in which an electronic device obtains a pixel value of a transparent region of a widget, according to an embodiment.
FIG. 11 is a view illustrating a method by which an electronic device displays a widget having a size different from a widget size supported by the electronic device, according to an embodiment.
FIG. 12 is a flowchart illustrating an operation in which an electronic device determines a template layout according to a type of a screen and a type of a widget, according to an embodiment.
FIG. 13 is a flowchart illustrating a method by which an electronic device provides various template layouts according to types of a screen, according to an embodiment.
FIGS. 14A, 14B, and 14C are views illustrating a method by which an electronic device provides various template layouts according to types of a screen, according to an embodiment.
FIG. 15 is a view illustrating operations in which an electronic device adjusts a widget according to a specified size corresponding to cells on a screen, according to an embodiment.

### [Mode for Carrying out the Invention]

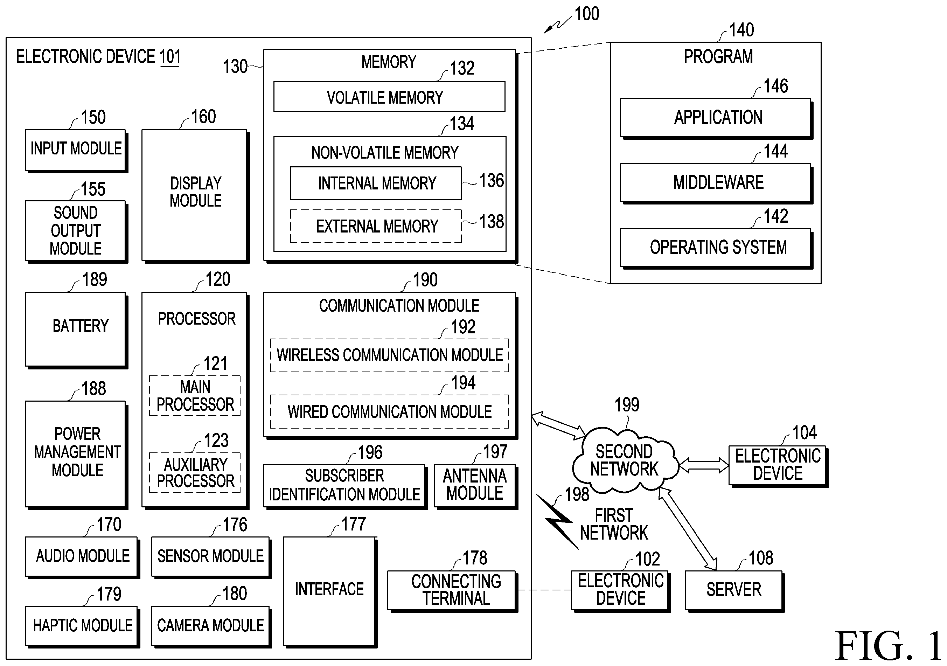

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC arranged on a first surface (e.g., the bottom surface) of the printed circuit board, or adjacent to the first surface and capable of supporting a specified high-frequency band (e.g., the mmWave band), and a plurality of antennas (e.g., array antennas) arranged on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

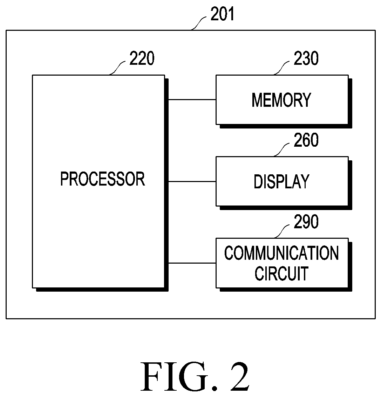

FIG. 2 is a block diagram illustrating components of an electronic device according to an embodiment.

Referring to FIG. 2, according to an embodiment, an electronic device 201 may include a processor 220, memory 230, a display 260, and a communication circuit 290.

A processor 220 (e.g., the processor 120 of FIG. 1) according to an embodiment may control the overall operation of the electronic device 201. The processor 220 according to an embodiment may execute software (e.g., a program 140 of FIG. 1) to control at least one other component (e.g., a hardware or software component) of the electronic device 201 connected to the processor 220, and may perform data processing or computation based on an instruction. An instruction according to an embodiment may include a command composed of machine language that may be processed by the electronic device 201 or the processor 220. For example, an instruction may include a command corresponding to an operation directive used in a program.

Meanwhile, FIG. 2 illustrates that the electronic device 201 includes one processor 220, but this is exemplary and the technical spirit of the disclosure may not be limited thereto. For example, the electronic device 201 may include at least one processor. For example, the processor 220 may be implemented as at least one processor.

According to an embodiment, memory 230 (e.g., the memory 130 of FIG. 1) may store at least one instruction (or instructions) causing at least one operation of the electronic device 201. At least one instruction, when executed by the processor 220, may cause the electronic device 201 to perform the corresponding operation.

According to an embodiment, the processor 220 may display various types of screens on the display 260 (e.g., the display 160 of FIG. 1). For example, a screen may include a home screen, a lock screen, an always on display (AOD) screen, a cover screen (e.g., a screen displayed on a display exposed to the outside included in a cover portion of the electronic device), and/or a watchface screen (e.g., a screen displayed on a display of a smart watch). For example, the display 260 may be implemented as a touch screen.

The processor 220 according to an embodiment may display, through the display 260, at least one widget, icon, and/or content on the corresponding screen. For example, a widget may represent an application (or mini-application) implemented to directly utilize, without directly launching a specific application, information (weather, calendar, news, or stock information), content (e.g., an image and/or a video), and/or a function (e.g., a music playback function, a calculator function) provided by the corresponding application.

The processor 220 according to an embodiment may display a first screen including a first widget corresponding to a first application (e.g., any one of applications stored in the memory 230) displayed on the display 260. For example, the first screen may be a home screen, a lock screen, an always on display (AOD) screen, a cover screen, or a watchface screen of the electronic device 201. The first widget may be any one widget supported by the first application. The first widget may display information (e.g., an object, content, text, an image, and/or a video) provided by the first application or perform a function provided by the first application.

According to an embodiment, the processor 220 may display a widget based on a pre-specified template layout. For example, the processor 220 may display, on the corresponding widget, information provided by a specific application arranged based on a template layout.

According to an embodiment, a template layout may represent information (e.g., template information) regarding a layout pre-specified for a widget. For example, a template layout may include objects indicating an approximate size and/or position where information provided by an application corresponding to a specific widget is arranged. Further, a template layout may include a skeleton layout (or skeleton image) indicating an approximate size and/or position where information provided by an application corresponding to a specific widget is arranged.

According to an embodiment, the processor 220 may identify a first input for editing (e.g., changing the size or position of) the first widget. For example, the first input may include a long press input to the first widget displayed on the display 260 (e.g., the touch screen 260).

According to an embodiment, the processor 220 may display, in response to the first input, a handler for adjusting the size of the first widget. For example, the handler may include lines surrounding the first widget and a plurality of dots. The plurality of dots may be displayed based on directions in which the size of the first widget is capable of increasing.

According to an embodiment, the processor 220 may adjust or change the size of the first widget based on a second input to the handler. For example, the second input may include a touch and drag (or tap and drag) input to the handler.

According to an embodiment, the processor 220 may display a preview image representing the size of the first widget adjusted in real-time based on the second input to the handler. In other words, the processor 220 may display, while adjusting the size of the first widget, a preview image corresponding to the corresponding size. According to an embodiment, the processor 220 may display, based on identifying a second input to the handler, a preview image corresponding to the first widget of the size adjusted by the second input instead of the first widget until the second input is released.

If the first widget of the adjusted size is to be displayed as a preview image, a resource for rendering or loading the first widget of the corresponding size may be required. This may cause an overload of the processor 220.

The processor 220 according to an embodiment may display, as a preview image, a first template layout of the adjusted size instead of the first widget of the adjusted size. For example, the first template layout may include an image representing a layout specified for the first widget. For example, the first template layout may be pre-stored in the memory 230. In other words, the processor 220 may load the pre-stored first template layout and display it as a preview image representing the adjusted size of the first widget.

Accordingly, the processor 220 may minimize an overload of the processor 220 in adjusting the size of the first widget. Further, the processor 220 may display a consistent preview image when adjusting (or changing) the size of the first widget.

According to an embodiment, the preview image may include a first template layout based on the size adjusted by the second input. For example, the first template layout may include a plurality of objects indicating positions where information related to the first application is to be displayed. For example, the plurality of objects may be implemented as various types of objects (e.g., a circle, a square, a rectangle, a rounded rectangle, and/or an ellipse). For example, a particular type of object (e.g., a first object) among the plurality of objects may be displayed at a fixed size even when the size of the first widget is changed by the second input. Further, a particular type of object (e.g., a second object) among the plurality of objects may be changed in size as the size of the first widget is changed based on the second input. Particular information provided by the first application may be displayed on a particular object. For example, through the first template layout, a user may roughly identify the arrangement or size of information provided by the adjusted first widget.

According to an embodiment, a first template layout for the first widget may be in any one size among a specified number of sizes. For example, the specified number may be automatically set by the processor 220 or determined by a user. For example, the specified number may be determined to be four or five.

According to an embodiment, when the size of the first widget is smaller than a specific size, the processor 220 may not display the first template layout in the preview image. In this case, the preview image may be implemented as a visual cue based on the size adjusted by the second input.

According to an embodiment, the processor 220 may display, on the display 260, in response to identifying that the second input is released, the first widget where information provided by the first application is arranged based on the first template layout. In this case, the first widget may be displayed in the size adjusted by the second input.

According to an embodiment, the processor 220 may identify, based on a type of the first screen, a plurality of template layouts supported by the first screen. For example, the plurality of template layouts may be pre-stored in the memory 230. The processor 220 may determine, based on the first widget, a first template layout among the plurality of template layouts.

According to an embodiment, the processor 220 may obtain template layouts applicable to various screens based on a plurality of reference template layouts. For example, the processor 220 may determine a plurality of first template layouts specified in a home screen as reference first template layouts. For example, the processor 220 may obtain, based on the first template layouts, a plurality of template layouts applied to various screens (e.g., a lock screen, a cover screen, a watchface screen). For example, in a plurality of template layouts applied to various screens, at least part of the size, shape, or arrangement of the first template layouts may be changed based on the corresponding screen.

According to an embodiment, when determining a widget applied to various screens, the processor 220 may set the color, shape, text form, weight, or size of the widget to be at least partially different according to the type of screen. The color, shape, text form, weight, or size of the widget may be determined based on the type of screen. For example, even when the type of screen changes, information provided by a specific widget corresponding to the same application may be identical.

A communication circuit 290 according to an embodiment may receive data from an external electronic device or transmit data to an external electronic device. For example, the processor 220 may obtain, through the communication circuit 290, information on a template layout for a widget from an external electronic device (e.g., a server). Alternatively, the processor 220 may transmit, through the communication circuit 290, information on a template layout for a widget to another electronic device. For example, the communication circuit 290 may be implemented substantially identical or similar to the communication module 190 of FIG. 1. For example, the communication circuit 290 may include at least one of a wireless local area network (WLAN) circuit (not illustrated) and a short-range communication circuit (not illustrated). For example, the communication circuit 290 may include a near field communication (NFC) communication circuit, a Bluetooth low energy (BLE) communication circuit and/or an ultra-wideband (UWB) communication circuit capable of transmitting/receiving a UWB signal with an external device using a plurality of antennas, a Wi-Fi communication circuit, and/or a Bluetooth Legacy communication circuit.

The electronic device 201 according to an embodiment may provide widgets offering various sizes and functions, and may provide a consistent, predictable, and compatible template system for widgets.

The electronic device 201 according to an embodiment may display, while changing the size of a widget displayed on a screen, a template layout corresponding to the changed size as a preview image instead of the widget of the changed size. Further, the electronic device 201 may adjust the widget to the specified size when the size of the widget is smaller than the size specified for cells on the screen. Further, the electronic device 201 may adjust a base layout to fit the corresponding screen so that a widget providing the same information and function may be applied to various types of screens.

At least a part of the operations of the electronic device 201 described below may be performed or controlled by the processor 220. However, for convenience of description, the following operations are described as being performed by the electronic device 201.

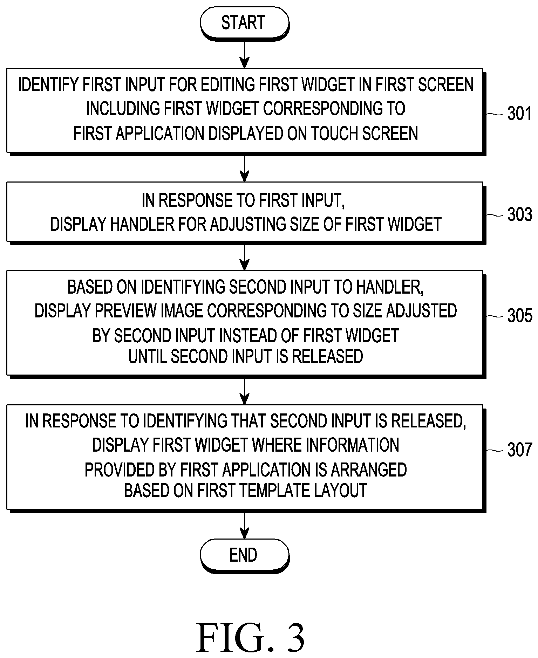

FIG. 3 is a flowchart illustrating operations in which an electronic device adjusts the size of a widget according to an embodiment.

Referring to FIG. 3, according to an embodiment, in operation 301, an electronic device (e.g., the electronic device 201 of FIG. 2) may identify a first input for editing the first widget in a first screen including a first widget corresponding to a first application displayed on a touch screen (e.g., the display 260 of FIG. 2). For example, the first screen may be a home screen, a lock screen, an AOD screen, a cover screen, or a watchface screen. For example, the first input may include a tap input or a long press input to the first widget.

According to an embodiment, in operation 303, the electronic device 201 may display, in response to the first input, a handler for adjusting the size of the first widget. For example, the handler may be displayed around the first widget or on top of the first widget.

According to an embodiment, the electronic device 201 may adjust the size of the first widget based on a second input to the handler. According to an embodiment, the electronic device 201 may display a preview image representing the size of the first widget in real-time when adjusting the size of the first widget through the handler. According to an embodiment, in operation 305, the electronic device 201 may display, based on identifying a second input to the handler, a preview image corresponding to the size adjusted by the second input instead of the first widget until the second input is released. For example, the preview image may include a template layout specified for the first widget.

According to an embodiment, in operation 307, the electronic device 201 may display, in response to identifying that the second input is released, the first widget where information provided by the first application is arranged based on the first template layout. In this case, the first widget may be displayed in the size adjusted by the second input.

Accordingly, the electronic device 201 may minimize an overload of the processor 220 in adjusting the size of the first widget. Further, the electronic device 201 may display a consistent preview image when adjusting (or changing) the size of the first widget.

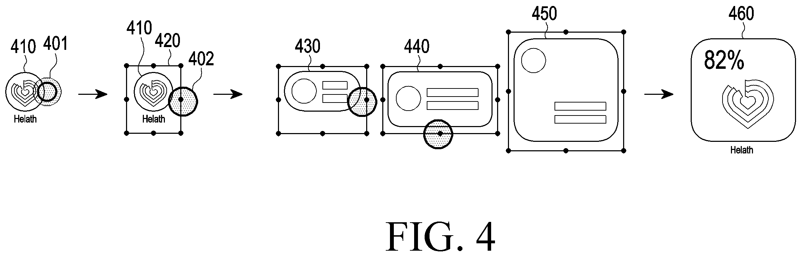

FIG. 4 is a view illustrating operations in which an electronic device adjusts the size of a widget, according to an embodiment.

Referring to FIG. 4, according to an embodiment, the electronic device 201 may identify a first input 401 to a first widget 410 displayed on a touch screen (e.g., the display 260 of FIG. 2).

According to an embodiment, the electronic device 201 may display, in response to identifying the first input 401, a handler 420 for adjusting the size of the first widget 410. The electronic device 201 may identify a second input 402 to the handler 420. The electronic device 201 may perform an operation for changing the size of the first widget 410 by the second input.

According to an embodiment, the electronic device 201 may display a template layout 430, 440, or 450 corresponding to the size of the first widget changed in the corresponding direction based on a second input dragging any one dot included in the handler. For example, the electronic device 201 may display a template layout 430 of the corresponding size based on a second input dragged to the right, display a template layout 440 of the corresponding size based on a second input dragged downward, and display a template layout 450 of the corresponding size based on a second input dragged further downward. For example, the template layout 450 may be displayed as opaque, semi-transparent, or at least partially transparent.

According to an embodiment, the electronic device 201 may end the operation of changing the size of the first widget in response to identifying the release of the second input. The electronic device 201 may display the first widget 460 based on the template layout 450 changed before the second input is released. In this case, the first widget 460 may have the same size as the template layout 450 changed before the second input is released. Further, the first widget 460 may determine the arrangement of information provided by the first widget 460 based on the changed size.

Through the above-described method, the electronic device 201 may minimize an overload of the processor 220 in adjusting the size of the first widget. Further, the electronic device 201 may display a consistent preview image when adjusting (or changing) the size of the first widget.

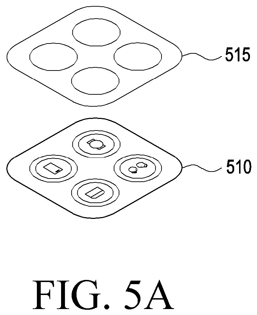

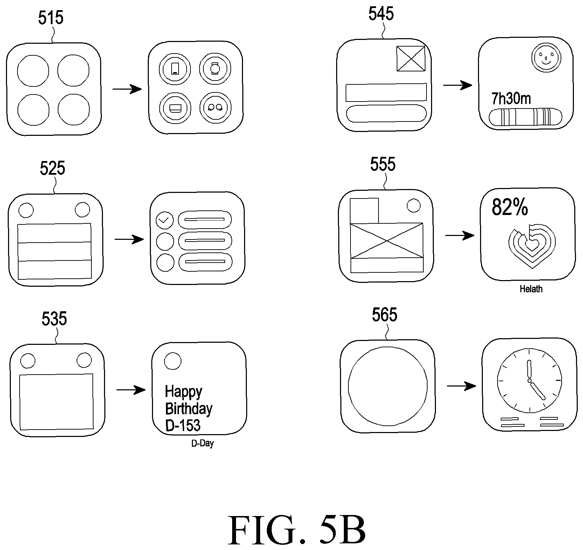

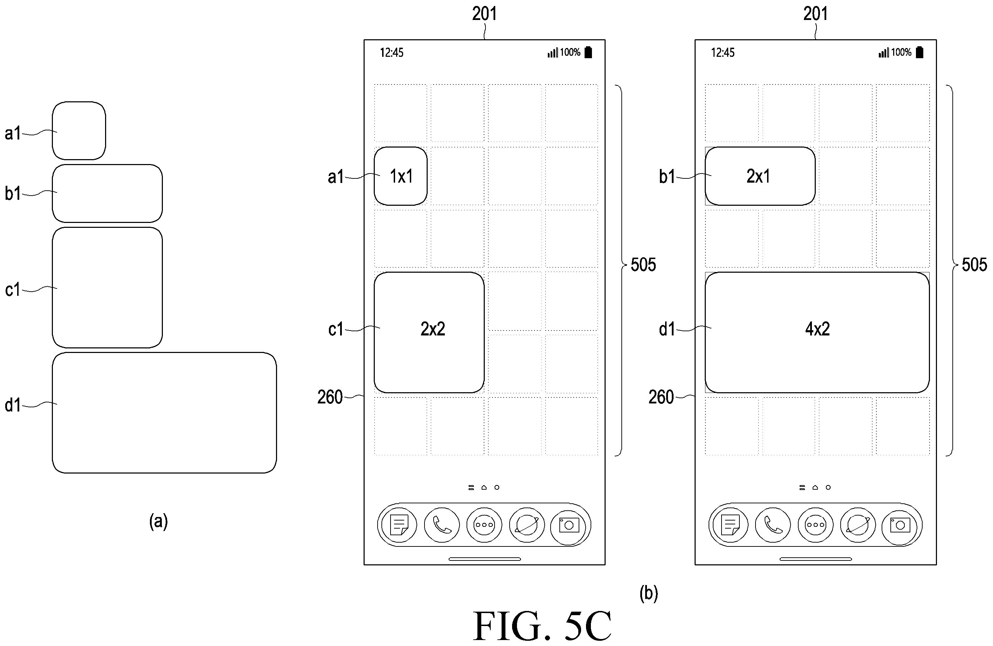

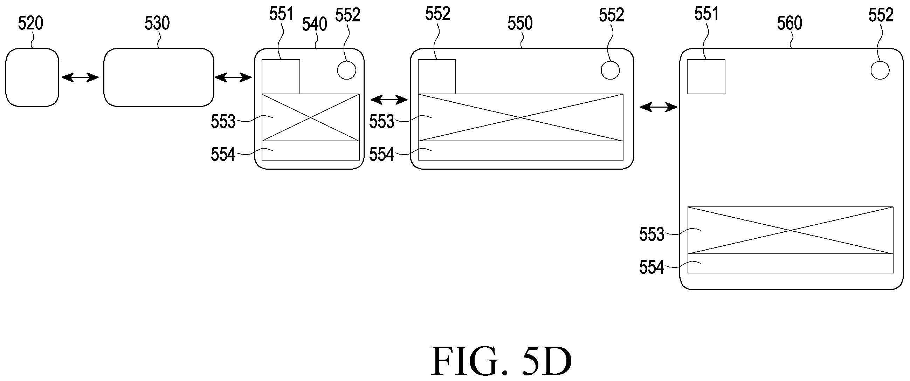

FIGS. 5A, 5B, 5C, and 5D are views illustrating a template layout displayed when an electronic device adjusts the size of a widget, according to an embodiment.

Referring to FIGS. 5A, 5B, 5C, and 5D, according to an embodiment, an electronic device (e.g., the electronic device 201 of FIG. 2) may identify a plurality of template layouts supported by the first screen based on a type of a first screen displayed on a display (e.g., the display 260 of FIG. 2). The electronic device 201 may identify or determine a first template layout 515 among a plurality of template layouts 515, 525, 535, 545, 555, and 565 based on a first widget 510 displayed on the first screen.

Referring to FIG. 5A, according to an embodiment, the electronic device 201 may identify a first template layout 515 specified for the first widget 510. For example, information provided by the first widget 510 may be arranged based on the first template layout 515.

Referring to FIG. 5B, according to an embodiment, the electronic device 201 may store a plurality of template layouts 515, 525, 535, 545, 555, and 565 in memory (e.g., the memory 230 of FIG. 2). For example, the plurality of template layouts 515, 525, 535, 545, 555, and 565 may correspond to widgets supported by a specific type of screen. For example, the plurality of template layouts may be specified for each widget. The electronic device 201 may display the corresponding widget based on a template layout specified for the specific widget.

Referring to (a) of FIG. 5C, according to an embodiment, a plurality of template layouts may be implemented in specified sizes. Further, the sizes of the plurality of template layouts may be a specified number. For example, the plurality of template layouts may be implemented in a first size a1, a second size b1, a third size c1, and a fourth size d1. For example, referring to (b) of FIG. 5C, the first size a1, the second size b1, the third size c1, and the fourth size d1 may have their size (or area) determined by virtual cells 505 for a display area of the display 260 (or a screen displayed on the display 260). For example, the first size a1 may be a size corresponding to a 1×1 cell (e.g., one cell), the second size b1 may be a size corresponding to 2×1 cells (e.g., two cells), the third size c1 may be a size corresponding to 2×2 cells (e.g., four cells), and the fourth size d1 may be a size corresponding to 4×2 cells (e.g., eight cells). Further, the plurality of template layouts may also be implemented in a fifth size (e.g., 4×4 cells) larger than the fourth size.

Referring to FIG. 5D, according to an embodiment, the electronic device 201 may display, while adjusting the size of a specific widget, a template layout 540, 550, or 560 specified for the specific widget as a preview image. For example, the template layout 540, 550, or 560 may be changed in size in real-time by a second input (e.g., a touch and drag input) for adjusting the size of the specific widget.

According to an embodiment, a template layout 530 may include a plurality of objects 551, 552, 553, and 554 implemented in various shapes. For example, the plurality of objects 551, 552, 553, and 554 may indicate positions where information (or content) provided by the first widget is arranged. Further, the plurality of objects 551, 552, 553, and 554 may also indicate an attribute of information displayed at the corresponding position. For example, a first object 551 and a second object 552 may not have their size and/or position changed by the second input. For example, content corresponding to the first object 551 and the second object 552 may be displayed at a fixed size even when the size of the corresponding widget is changed. Further, e.g., content corresponding to the first object 551 and the second object 552 may be displayed at a fixed position even when the size of the corresponding widget is changed. For example, the first object 551 and the second object 552 may not have their size and/or position changed by the second input. For example, content corresponding to a third object 553 and a fourth object 554 may be changed in size based on the size of the widget when the size of the corresponding widget is changed. For example, the plurality of objects 551, 552, 553, and 554 may be displayed as particular types of objects according to their attributes. For example, an object representing a fixed size may be displayed as a circle or a square, and an object representing a variable size may be displayed as a rectangle or a rounded rectangle.

According to an embodiment, when the preview image is smaller than a specific size (e.g., a medium size), e.g., a tiny size or a small size, the electronic device 201 may not display a template layout in the preview image 520 or 530. For example, when the preview image is a medium size or larger, the electronic device 201 may display a template layout 540, 550, or 560 corresponding to the preview image.

According to the above-described method, the electronic device 201 may display, when changing the size of a widget, a template layout representing an approximate arrangement of the corresponding widget as a preview image. Accordingly, a user of the electronic device 201 may roughly identify what form and size the widget of the changed size has.

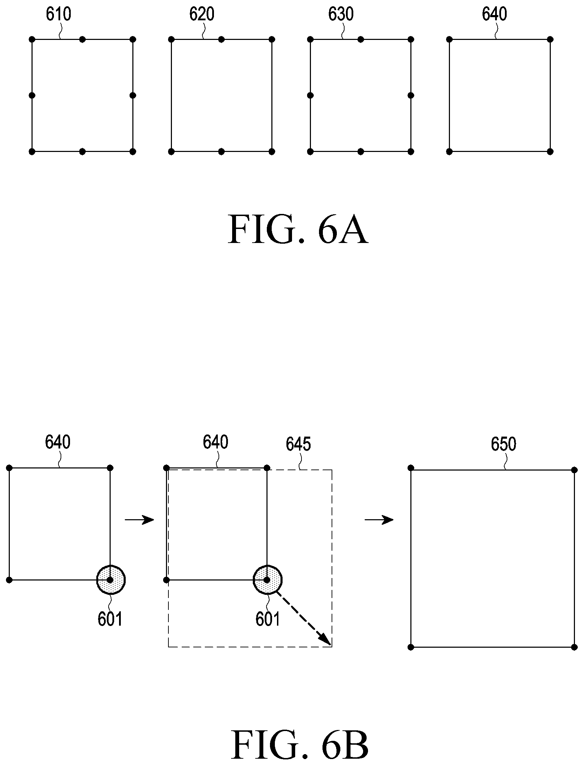

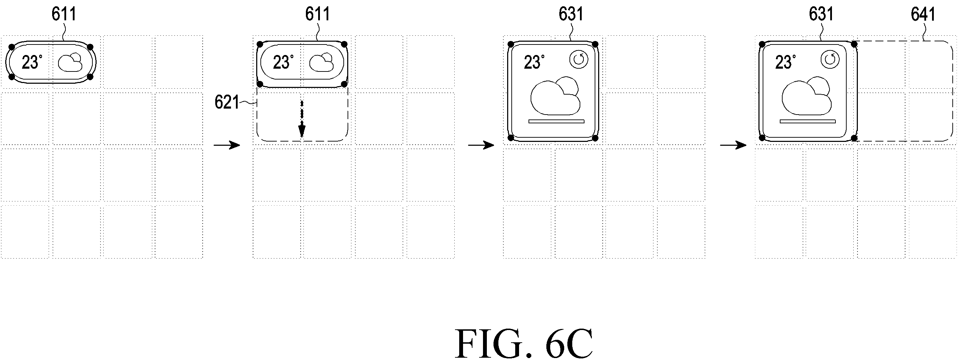

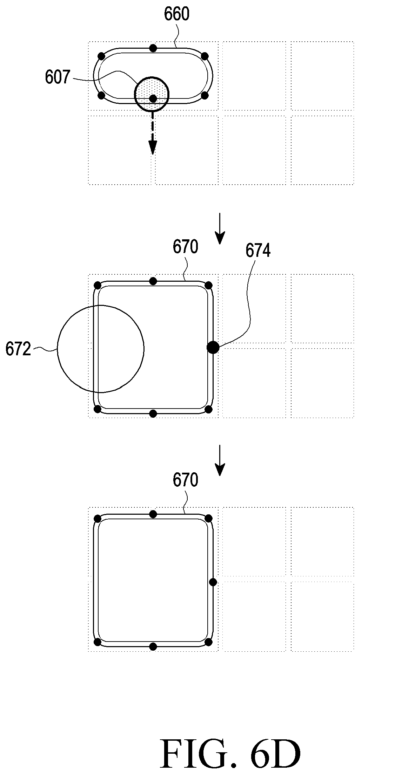

FIGS. 6A, 6B, 6C, and 6D are views illustrating a handler displayed when an electronic device adjusts the size of a widget, according to an embodiment.

Referring to FIGS. 6A, 6B, 6C, and 6D, according to an embodiment, an electronic device (e.g., the electronic device 201 of FIG. 2) may display a handler 610, 620, 630, or 640 to adjust the size of a widget. For example, the handler 610, 620, 630, or 640 may include a line surrounding the first widget and a plurality of dots displayed on the line. For example, the plurality of dots may be displayed at positions corresponding to directions in which the size of the widget is capable of changing. For example, as illustrated in FIG. 6A, the electronic device 201 may display various types of handlers 610, 620, 630, or 640 based on directions in which the size of the widget is capable of changing.

Referring to FIG. 6B, according to an embodiment, the electronic device 201 may enlarge the size of the first widget based on a second input 601 to one dot included in the handler 640. For example, the electronic device 201 may display a preview image 645 (e.g., a visual cue) representing the adjusted size. For example, the preview image 645 may include a template layout specified for the corresponding widget. Thereafter, the electronic device 201 may display a handler 650 corresponding to the enlarged size if the second input 601 is not released.

Referring to FIG. 6C, according to an embodiment, the electronic device 201 may display a handler 611 for changing the size of the first widget (e.g., a weather widget). For example, the electronic device 201 may display a preview image 621 corresponding to the enlarged size of the first widget according to a second input 603 in a downward direction to the handler 611. The electronic device 201 may display the first widget of the enlarged size when the second input 603 is released. Thereafter, the electronic device 201 may further enlarge the size of the first widget based on another second input 605. For example, the electronic device 201 may display a preview image 641 corresponding to the enlarged size of the first widget according to a second input 605 in a rightward direction to the handler 631. The electronic device 201 may display the second widget of the enlarged size when the second input 605 is released.

Referring to FIG. 6D, according to an embodiment, a handler 660 may include dots corresponding to directions in which the size of the widget is capable of changing. The electronic device 201 may enlarge the size of the widget based on an input 607 in a downward direction to a dot located on the bottom side of the handler 660. In this case, the electronic device 201 may display a handler 670 corresponding to the enlarged widget. The handler 670 may not display a dot in a direction 672 in which the size of the widget may not be changed. Further, the electronic device 201 may display a newly displayed dot 674 in a manner distinguishable from other dots (e.g., enlarged) for a specified time. After the specified time elapses, the electronic device 201 may display the newly displayed dot of the handler 670 the same as the other dots.

According to the above-described method, the electronic device 201 may provide various types of handlers for adjusting the size of a widget. Accordingly, a user of the electronic device 201 may easily and effectively adjust the size of a widget.

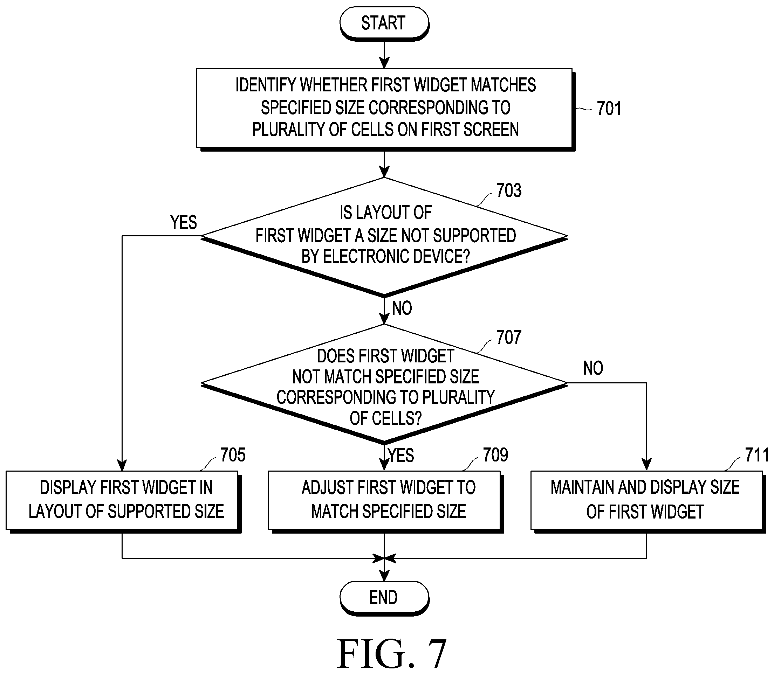

FIG. 7 is a flowchart illustrating operations in which an electronic device adjusts a widget according to a specified size corresponding to cells on a screen, according to an embodiment.

Referring to FIG. 7, according to an embodiment, in operation 701, an electronic device (e.g., the electronic device 201 of FIG. 2) may identify whether a first widget matches a specified size corresponding to a plurality of cells on a first screen displayed on a display (e.g., the display 260 of FIG. 2). For example, as illustrated in FIG. 5C, sizes corresponding to a plurality of cells (e.g., sizes corresponding to 1×1, 2×1, 2×2, and 4×2) may be specified.

According to an embodiment, in operation 703, the electronic device 201 may identify whether a layout of the first widget has a size not supported by the electronic device 201 (or the first screen). For example, as illustrated in FIG. 5C, sizes supported by the electronic device 201 may include four sizes (e.g., sizes corresponding to 1×1, 2×1, 2×2, and 4×2).

According to an embodiment, if it is identified that the layout of the first widget has a size not supported by the electronic device 201 (Yes in operation 703), in operation 705, the electronic device 201 may forcibly display the first widget in a layout of a size supported by the electronic device 201. For example, the electronic device 201 may display the first widget within a layout of a size larger than the first widget.

According to an embodiment, if it is identified that the layout of the first widget has a size supported by the electronic device 201 (No in operation 703), in operation 707, the electronic device 201 may identify whether the first widget does not match the specified size corresponding to the plurality of cells.

According to an embodiment, if it is identified that the first widget does not match the specified size corresponding to the plurality of cells (Yes in operation 707), in operation 709, the electronic device 201 may adjust the size of the first widget to match the specified size.

According to an embodiment, if it is identified that the first widget matches the specified size corresponding to the plurality of cells (No in operation 707), in operation 711, the electronic device 201 may maintain and display the size of the first widget.

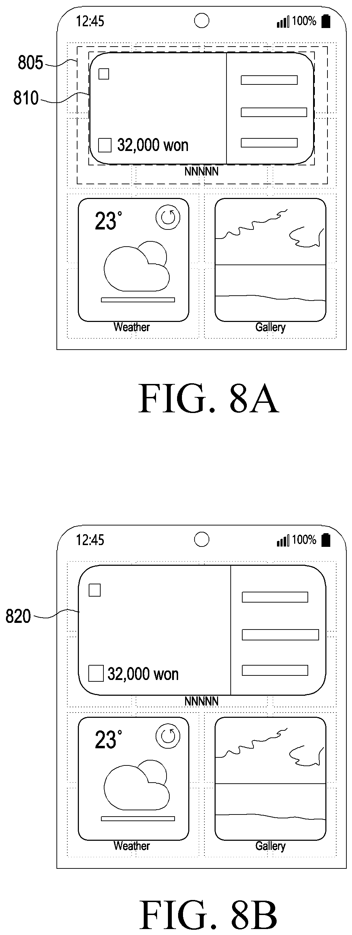

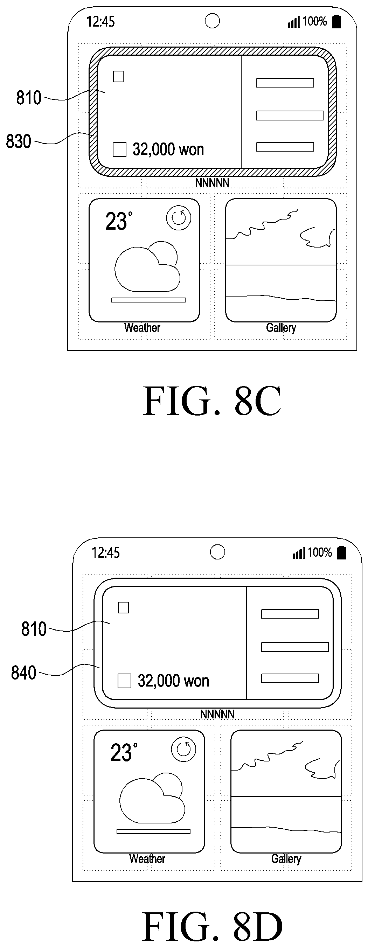

FIGS. 8A, 8B, 8C, and 8D are views illustrating operations in which an electronic device adjusts a widget according to a specified size corresponding to cells on a screen, according to an embodiment.

Referring to FIG. 8A, according to an embodiment, an electronic device (e.g., the electronic device 201 of FIG. 2) may identify that a first widget 810 (e.g., a widget supported by a third-party application) does not match a specified size 805 corresponding to a plurality of cells (e.g., a size corresponding to a 4×2 size). For example, the electronic device 201 may identify that the first widget 810 having a size of 4×2 is smaller than the specified size 805 specified in the electronic device 201. For example, the electronic device 201 may adjust the first widget 810 to match the specified size 805, as with other widgets.

Referring to FIG. 8B, according to an embodiment, the electronic device 201 may perform an out-painting operation on an image of the first widget 810 to enlarge the first widget 810 to match the specified size 805. For example, the out-painting operation may include an operation of enlarging and displaying the first widget to match the specified size 805 (e.g., an operation of displaying the first widget in a size corresponding to the enlarged first widget 820). As part of the out-painting operation, the electronic device 201 may determine, while maintaining the image form of the first widget 810, an external portion of the first widget (e.g., an area requiring extension) corresponding to the specified size 805. As part of the out-painting operation, the electronic device 201 may perform an operation of generating an image (e.g., an extended image) that matches the image of the first widget 810 in the corresponding external portion (e.g., an area requiring extension), and displaying the generated image in the external portion (e.g., the area requiring extension).

Referring to FIG. 8C, according to an embodiment, the electronic device 201 may display (or fill) a representative color (e.g., green) of the first widget 810 in an external portion 830 of the first widget 810 to match the specified size 805.

Referring to FIG. 8D, according to an embodiment, the electronic device 201 may display (or fill) a specified color (e.g., gray) of the first widget 810 in an external portion 840 of the first widget 810 to match the specified size 805.

According to the above-described method, the electronic device 201 may adjust the sizes of widgets to match one another.

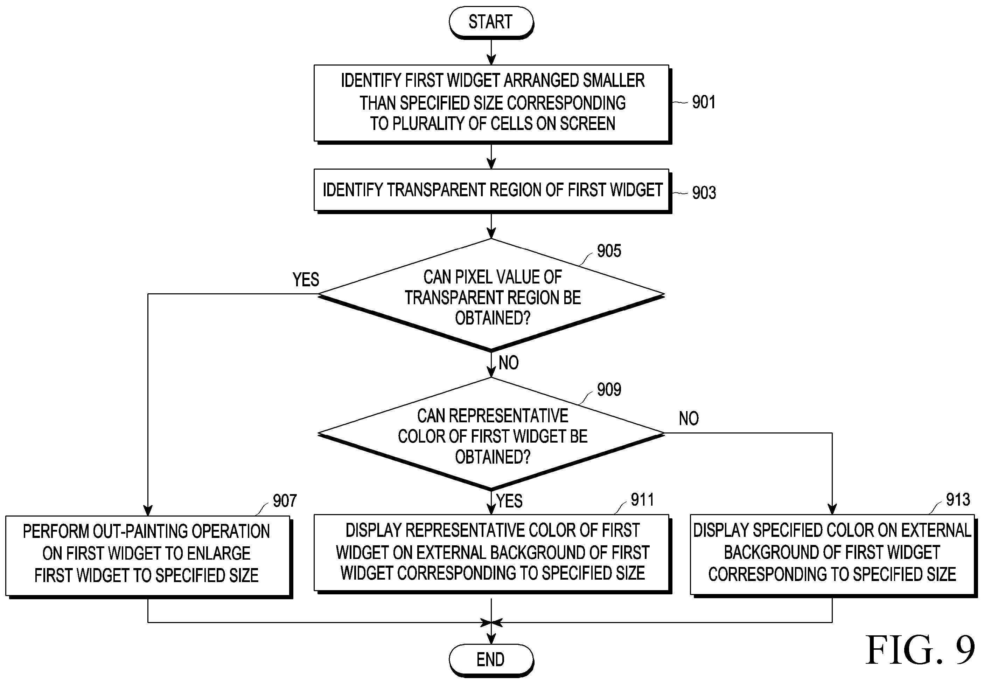

FIG. 9 is a flowchart illustrating operations in which an electronic device adjusts a widget according to a specified size corresponding to cells on a screen, according to an embodiment.

Referring to FIG. 9, according to an embodiment, in operation 901, an electronic device (e.g., the electronic device 201 of FIG. 2) may identify a first widget displayed (or arranged) smaller than a specified size corresponding to a plurality of cells on a screen.

According to an embodiment, in operation 903, the electronic device 201 may identify a transparent region of the first widget. For example, a transparent region may represent a region having a transparent attribute in the first widget. For example, a transparent region may include a region corresponding to a boundary between the first widget and a background. According to another embodiment, if it is identified that the transparent region may not be identified, the electronic device 201 may identify whether a representative color of the first widget may be identified (e.g., operation 909).

According to an embodiment, in operation 905, the electronic device 201 may identify whether a pixel value of the transparent region may be obtained.

According to an embodiment, if it is identified that the pixel value of the transparent region may be obtained (Yes in operation 905), in operation 907, the electronic device 201 may perform an out-painting operation on the first widget to enlarge the first widget to the specified size.

According to an embodiment, if it is identified that the pixel value of the transparent region may not be obtained (No in operation 905), in operation 909, the electronic device 201 may identify whether a representative color of the first widget may be obtained. For example, the representative color of the first widget may represent a dominant color in the first widget. For example, a color corresponding to an average value of pixel values representing the first widget may be determined as the representative color of the first widget.

According to an embodiment, if it is identified that the representative color of the first widget may be obtained (Yes in operation 909), in operation 911, the electronic device 201 may display (or fill) the representative color of the first widget on an external background of the first widget corresponding to the specified size.

According to an embodiment, if it is identified that the representative color of the first widget may not be obtained (No in operation 909), in operation 913, the electronic device 201 may display (or fill) a specified color of the first widget on an external background of the first widget corresponding to the specified size. For example, the specified color may be automatically specified by the electronic device 201 or specified by a user.

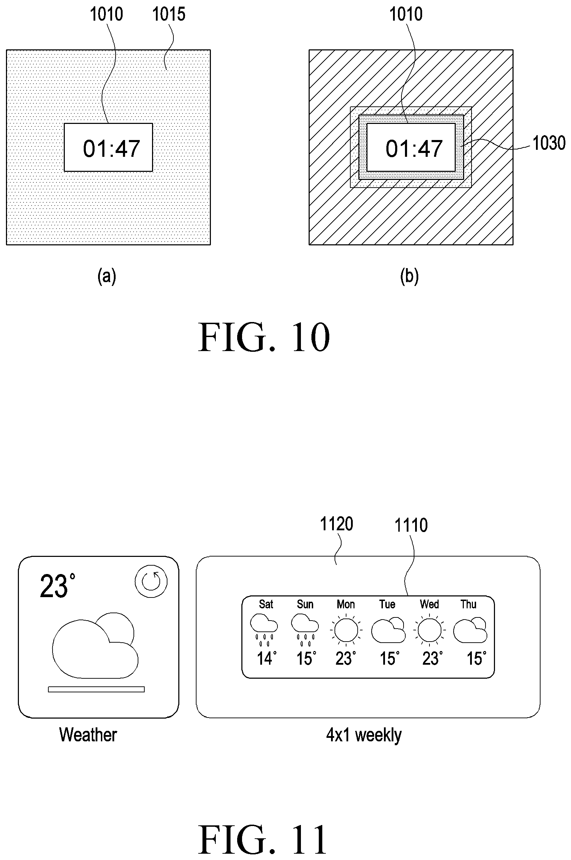

FIG. 10 is a view illustrating operations in which an electronic device obtains a pixel value of a transparent region of a widget, according to an embodiment.

Referring to FIG. 10, according to an embodiment, an electronic device (e.g., the electronic device 201 of FIG. 2) may identify a widget 1010 displayed on a screen 1015.

According to an embodiment, the electronic device 201 may identify a transparent region of the widget 1010 and a pixel value of the transparent region in order to extend or adjust the widget 1010 to match a size specified for cells on the screen 1015.

According to an embodiment, the electronic device 201 may identify the transparent region of the widget 1010. For example, the electronic device 201 may separate the widget 1010 from the screen 1015 and identify the transparent region (e.g., a hatched region) of the widget 1010. Thereafter, the electronic device 101 may obtain a pixel value from a partial region 1030 of the widget 1010 adjacent to a region based on a region between the transparent region and the widget 1010. The electronic device 201 may perform an out-painting operation on the widget 1010 based on the obtained pixel value. For example, as part of the out-painting operation, the electronic device 201 may generate an image (e.g., an extended image) that matches the image of the first widget 1010 in an external portion (e.g., an area requiring extension) of the first widget 1010 based on the obtained pixel value, and display the generated image in the corresponding external portion (e.g., the area requiring extension). Alternatively, the electronic device 201 may display (or fill) a representative value corresponding to the pixel value in the external portion of the first widget 1010 without performing the out-painting operation.

FIG. 11 is a view illustrating a method by which an electronic device displays a widget having a size different from a widget size supported by the electronic device, according to an embodiment.

Referring to FIG. 11, according to an embodiment, an electronic device (e.g., the electronic device 201 of FIG. 2) may identify whether a layout of a first widget 1110 (e.g., a widget supported by a third-party application) has a size not supported by the electronic device 201 (or the first screen).

For example, as illustrated in FIG. 5C, sizes supported by the electronic device 201 may include four sizes (e.g., sizes corresponding to 1×1, 2×1, 2×2, and 4×2). For example, the first widget 1110 may differ from the four sizes supported by the electronic device 201.

According to an embodiment, the electronic device 201 may display the first widget 1110 in a layout of a size supported by the electronic device 201. For example, the electronic device 201 may include the first widget 1110 in a container 1120 (e.g., a size of 4×1) larger than the first widget 1110. The electronic device 201 may display the container 1120 including an image representing the first widget 1110 as the first widget 1110.

Through the above-described method, the electronic device 201 may standardize, to a layout supported by the electronic device, a widget (e.g., a widget supported by a third-party application) having a layout not supported by the electronic device 201. Accordingly, the electronic device 201 may provide a widget having a unified standard.

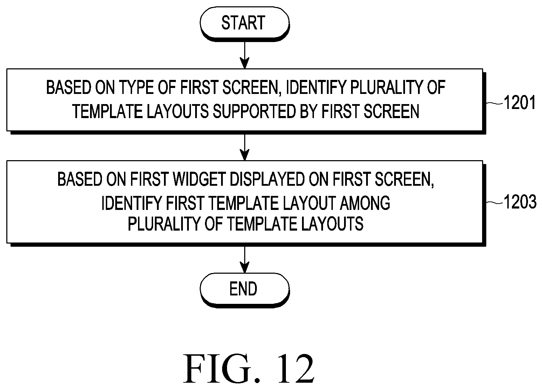

FIG. 12 is a flowchart illustrating an operation in which an electronic device determines a template layout according to a type of a screen and a type of a widget, according to an embodiment.

Referring to FIG. 12, according to an embodiment, in operation 1201, an electronic device (e.g., the electronic device 201 of FIG. 2) may identify, based on a type of a first screen displayed on a display (e.g., the display 260 of FIG. 2), a plurality of template layouts supported by the first screen.

According to an embodiment, in operation 1203, the electronic device 201 may identify, based on a first widget displayed on the first screen, a first template layout specified for the first widget among the plurality of template layouts.

According to an embodiment, the electronic device 201 may display, while adjusting the size of the first widget, a first template layout corresponding to the adjusted size.

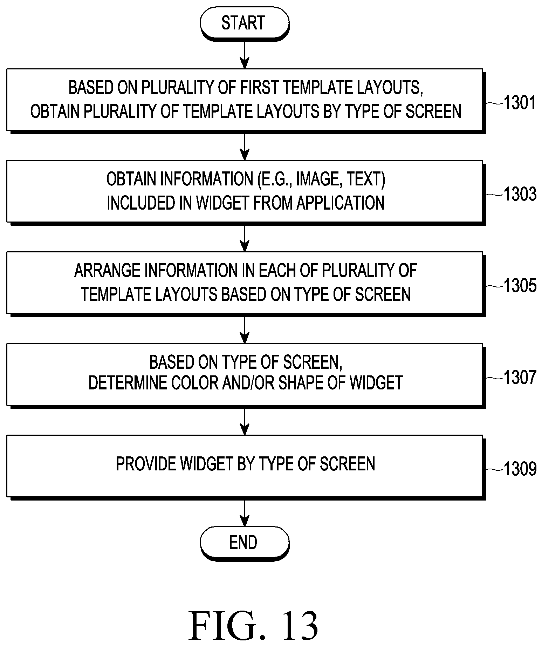

FIG. 13 is a flowchart illustrating a method by which an electronic device provides various template layouts according to types of a screen, according to an embodiment.

Referring to FIG. 13, according to an embodiment, an electronic device (e.g., the electronic device 201 of FIG. 2) may obtain a widget suitable for the corresponding screen according to the type of screen on which the widget is displayed. For example, the corresponding operations may be performed in a framework of the electronic device 201.

According to an embodiment, in operation 1301, the electronic device 201 may obtain, based on a plurality of first template layouts for widgets supported on a first screen (e.g., a home screen) of the electronic device 201, a plurality of template layouts for widgets supported by each type of screen. For example, the electronic device 201 may obtain, based on the plurality of first template layouts for widgets supported on the home screen, a plurality of template layouts for widgets supported on other screens (e.g., a lock screen, a cover screen, a watchface screen, and an edge screen). In the plurality of template layouts for other screens, at least one of size, arrangement, and shape may be changed relative to the first template layouts.

According to an embodiment, in operation 1303, the electronic device 201 may obtain, from an application stored in the memory 230, information (e.g., content, an image, text) included in a widget supported by the application.

According to an embodiment, in operation 1305, the electronic device 201 may arrange the information in each of the plurality of template layouts based on the type of screen.

According to an embodiment, in operation 1307, based on the type of screen, the electronic device 201 may determine a color and/or shape applied to widgets. For example, the electronic device 201 may determine, based on the type of screen, a shade of a widget, a background color of a widget, and a weight or color of text included in a widget.

According to an embodiment, in operation 1309, the electronic device 201 may provide, by type of screen, widgets obtained based on operations 1301 to 1307. For example, for a widget supported by the same application, the electronic device 201 may provide a widget at least partially different according to the type of screen.

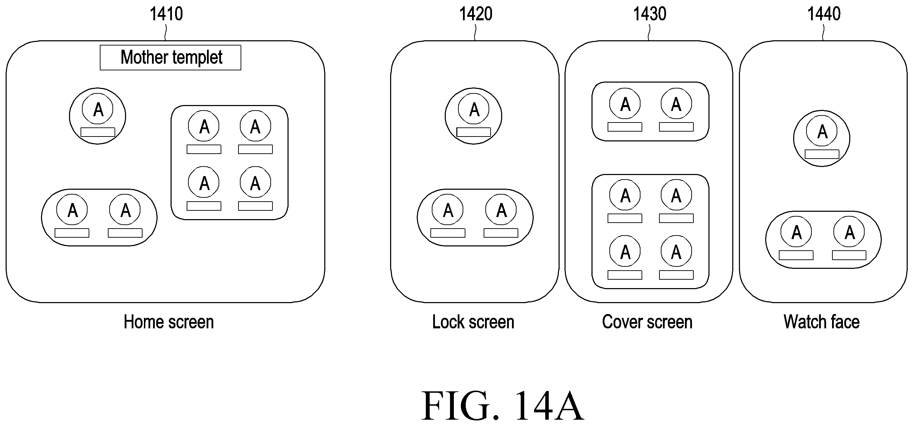

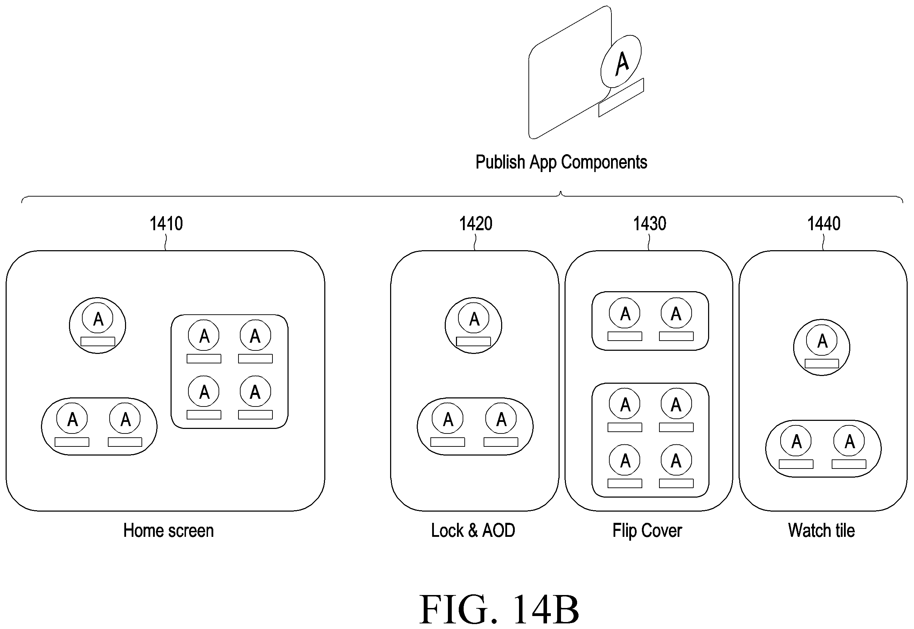

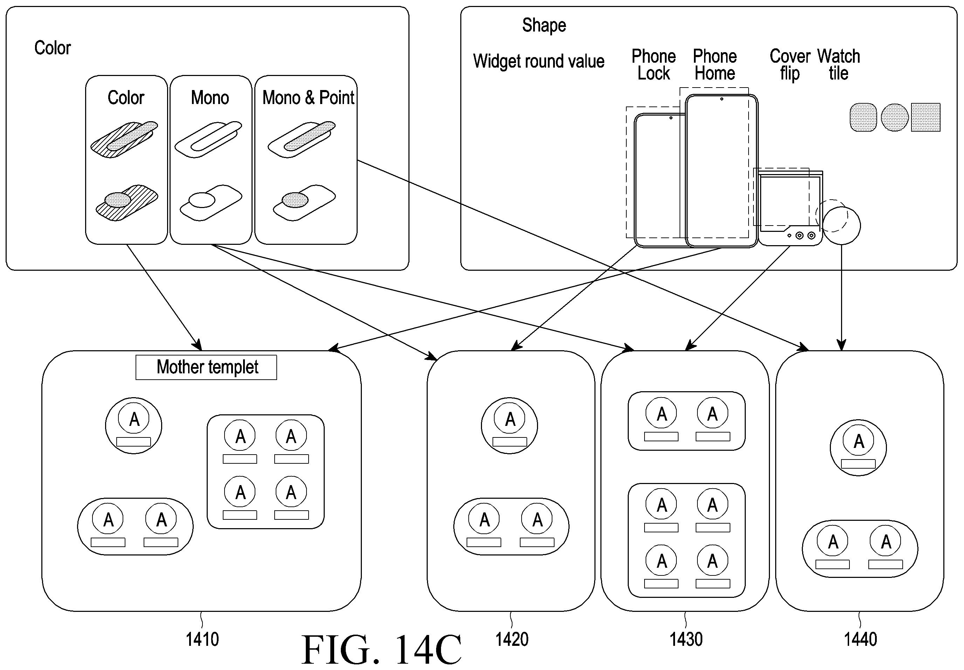

FIGS. 14A, 14B, and 14C are views illustrating a method by which an electronic device provides various template layouts according to types of a screen, according to an embodiment.

Referring to FIG. 14A, according to an embodiment, an electronic device (e.g., the electronic device 201 of FIG. 2) may obtain a plurality of template layouts 1420, 1430, and 1440 for widgets provided on other screens (e.g., a lock screen, a cover screen, a watchface) based on a plurality of first template layouts 1410 for widgets provided on a home screen. For example, the electronic device 201 may obtain second template layouts 1420 obtained by changing at least one of size, arrangement, or shape with respect to the first template layouts 1410 based on an attribute (e.g., the size or configuration of the screen) of the lock screen. For example, the electronic device 201 may obtain third template layouts 1430 obtained by changing at least one of size, arrangement, or shape with respect to the first template layouts 1410 based on an attribute (the size, shape, and/or configuration of the screen) of the cover screen. For example, the electronic device 201 may obtain fourth template layouts 1440 obtained by changing at least one of size, arrangement, or shape with respect to the first template layouts 1410 based on an attribute (the size, form, and/or configuration of the screen) of the watchface screen.

Referring to FIG. 14B, according to an embodiment, the electronic device 201 may obtain, from an application stored in the memory 230, information (e.g., application component information) to be included in a widget supported by the application. The electronic device 201 may arrange the information in each of the plurality of template layouts obtained for each type of screen.

Referring to FIG. 14C, according to an embodiment, based on the type of screen, the electronic device 201 may determine a color and shape applied to widgets. For example, based on the type of screen, the electronic device 201 may determine a color to be applied to a widget and a shape of the widget.

According to an embodiment, the electronic device 201 may determine, for the home screen, lock screen, cover screen, and watchface screen, the size and shape of a widget based on the size and shape of the corresponding screen. For example, since the cover screen has a smaller screen size than the home screen, the size of the third template layouts 1430 may be smaller than the size of the first template layouts 1410. For example, since a watchface is circular, the shape of the fourth template layouts 1440 may be circular.

For example, the electronic device 201 may apply a specified color (e.g., a color theme) to the lock screen, cover screen, and watchface screen. For example, the electronic device 201 may apply a chromatic color (e.g., a color theme) to widgets corresponding to the first template layouts 1410. The electronic device 201 may apply an achromatic color (e.g., a mono color theme) to widgets corresponding to the second template layouts 1420 and the third template layouts 1430. The electronic device 201 may apply an achromatic color and a point color (e.g., a mono and point theme) to widgets corresponding to the fourth template layouts 1440.

According to an embodiment, the electronic device 201 may provide widgets at least partially different according to the type of screen by the above-described method. Accordingly, for a widget supported by the same application, the electronic device 201 may provide a widget that naturally fits the corresponding screen.

Meanwhile, the plurality of template layouts illustrated in FIGS. 14A to 14C and themes related to colors and shapes applied to widgets are exemplary, and the technical spirit of the disclosure may not be limited thereto.

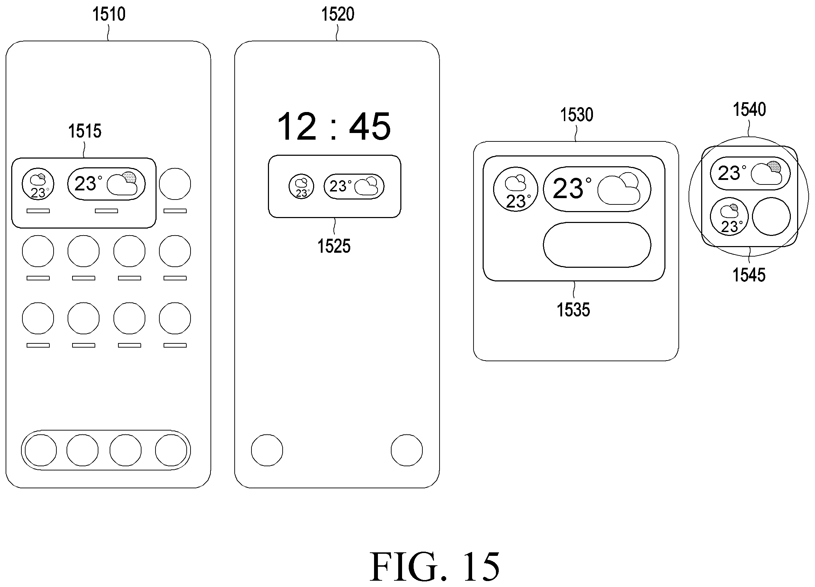

FIG. 15 is a view illustrating operations in which an electronic device adjusts a widget according to a specified size corresponding to cells on a screen, according to an embodiment.

Referring to FIG. 15, according to an embodiment, the electronic device 201 may provide, for a widget supported by the same application, a widget specified for each screen.

For example, the size, form, and/or shape of each widget may be at least partially different according to the type of screen. However, the information provided by each widget may be identical.

According to an embodiment, the electronic device 201 may provide weather widgets (e.g., widgets provided by a weather application) that differ in at least one of size, form, and/or shape for each screen.

According to an embodiment, the electronic device 201 may provide a first widget 1515 for a home screen 1510, a second widget 1525 for a lock screen 1520, a third widget 1535 for a cover screen 1530, and a fourth widget 1545 for a watchface screen 1540. For example, the widgets 1515, 1525, 1535, and 1545 provided by the electronic device 201 may differ in at least one of color, size, form, or shape according to the type of screen. However, the information provided by the widgets 1515, 1525, 1535, and 1545 (e.g., an image representing a temperature and a cloud condition) may be identical.

According to an embodiment, the electronic device 201 may provide widgets suitable for the corresponding screen according to the type of screen by the above-described method. Accordingly, for a widget supported by the same application, the electronic device 201 may provide widgets that naturally fit the corresponding screen.

According to an embodiment, an electronic device 201 may include a touch screen 260, at least one processor 220, and memory 230 storing instructions. According to an embodiment, when executed by the at least one processor, the instructions may cause the electronic device to identify the first input for editing a first widget corresponding to a first application included in a first screen displayed on the touch screen. According to an embodiment, when executed by the at least one processor, the instructions may cause the electronic device to display, in response to the first input, a handler for adjusting a size of the first widget. According to an embodiment, when executed by the at least one processor, the instructions may cause the electronic device to display, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

According to an embodiment, when executed by the at least one processor, the instructions may cause the electronic device to identify, based on a type of the first screen, a plurality of template layouts supported by the first screen. According to an embodiment, when executed by the at least one processor, the instructions may cause the electronic device to determine, based on the first widget, a first template layout among the plurality of template layouts.

According to an embodiment, when executed by the at least one processor, the instructions may cause the electronic device to identify, when the first screen is identified as a home screen, a plurality of first template layouts specified in the home screen. According to an embodiment, when executed by the at least one processor, the instructions may cause the electronic device to identify, when the first screen is identified as a lock screen, a plurality of second template layouts specified in the lock screen. According to an embodiment, the plurality of second template layouts may be changed in at least part of size, shape, or arrangement with respect to the first template layout based on the lock screen. According to an embodiment, when executed by the at least one processor, the instructions may cause the electronic device to identify, when the first screen is identified as a cover screen, a plurality of third template layouts specified in the cover screen. According to an embodiment, the plurality of third template layouts may be changed in at least part of size, shape, or arrangement with respect to the first template layout based on the cover screen. According to an embodiment, when executed by the at least one processor, the instructions may cause the electronic device to identify, when the first screen is identified as a watchface screen, a plurality of fourth template layouts specified in the watchface screen. According to an embodiment, the plurality of fourth template layouts may be changed in at least part of size, shape, or arrangement with respect to the first template layout based on the watchface screen.

According to an embodiment, when executed by the at least one processor, the instructions may cause the electronic device to display, on the touch screen, in response to identifying that the second input is released, the first widget where information provided by the first application is arranged based on the first template layout of the adjusted size.

According to an embodiment, the first template layout may be displayed in a size corresponding to the adjusted size among specified sizes.

According to an embodiment, when executed by the at least one processor, the instructions may cause the electronic device to display, when it is identified that the adjusted size is smaller than a specific size, a preview image that does not include the first template layout in response to the second input.

According to an embodiment, when executed by the at least one processor, the instructions may cause the electronic device to display the first widget to correspond to a specified size corresponding to a plurality of cells on the first screen.

According to an embodiment, when executed by the at least one processor, the instructions may cause the electronic device to perform an out-painting operation on the first widget to enlarge the first widget to the specified size or display a representative color of the first widget or a specified color on an external background of the first widget corresponding to the specified size.

According to an embodiment, the handler may include lines surrounding the first widget and a plurality of dots. According to an embodiment, the plurality of dots may be displayed based on directions in which the size of the first widget is capable of increasing.

According to an embodiment, the first input may include a long press input to the first widget. According to an embodiment, the second input may include a touch and drag input to the handler.

According to an embodiment, a method of operating an electronic device 201 may include an operation of identifying the first input for editing a first widget corresponding to a first application included in a first screen displayed on a touch screen 260 included in the electronic device. According to an embodiment, the method of operating the electronic device may include an operation of displaying, in response to the first input, a handler for adjusting a size of the first widget. According to an embodiment, the method of operating the electronic device may include an operation of displaying, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

According to an embodiment, the method of operating the electronic device may further include an operation of identifying, based on a type of the first screen, a plurality of template layouts supported by the first screen. According to an embodiment, the method of operating the electronic device may further include an operation of determining, based on the first widget, a first template layout among the plurality of template layouts.

According to an embodiment, the method of operating the electronic device may include an operation of identifying, when the first screen is identified as a home screen, a plurality of first template layouts specified in the home screen. According to an embodiment, the method of operating the electronic device may also include an operation of identifying, when the first screen is identified as a lock screen, a plurality of second template layouts specified in the lock screen. According to an embodiment, the plurality of second template layouts may be changed in at least part of size, shape, or arrangement with respect to the first template layout based on the lock screen. According to an embodiment, the method of operating the electronic device may further include an operation of identifying, when the first screen is identified as a cover screen, a plurality of third template layouts specified in the cover screen. According to an embodiment, the plurality of third template layouts may be changed in at least part of size, shape, or arrangement with respect to the first template layout based on the cover screen. According to an embodiment, the method of operating the electronic device may further include an operation of identifying, when the first screen is identified as a watchface screen, a plurality of fourth template layouts specified in the watchface screen. According to an embodiment, the plurality of fourth template layouts may be changed in at least part of size, shape, or arrangement with respect to the first template layout based on the watchface screen.

According to an embodiment, the method of operating the electronic device may further include an operation of displaying, on the touch screen, in response to identifying that the second input is released, the first widget where information provided by the first application is arranged based on the first template layout of the adjusted size.

According to an embodiment, the first template layout may be displayed in a size corresponding to the adjusted size among specified sizes.

According to an embodiment, the method of operating the electronic device further includes an operation of displaying, when it is identified that the adjusted size is smaller than a specific size, a preview image that does not include the first template layout in response to the second input.

According to an embodiment, the method of operating the electronic device may further include an operation of displaying the first widget to correspond to a specified size corresponding to a plurality of cells on the first screen.

According to an embodiment, the operation of extending the first widget may further include an operation of performing an out-painting operation on the first widget to enlarge the first widget to the specified size or displaying a representative color of the first widget or a specified color on an external background of the first widget corresponding to the specified size.

According to an embodiment, the handler may include lines surrounding the first widget and a plurality of dots. According to an embodiment, the plurality of dots may be displayed based on directions in which the size of the first widget is capable of increasing.

According to an embodiment, a non-transitory recording medium 230 may store instructions executable to perform an operation of identifying the first input for editing a first widget corresponding to a first application included in a first screen displayed on a touch screen 260 included in an electronic device 201, an operation of displaying, in response to the first input, a handler for adjusting a size of the first widget, and an operation of displaying, based on identifying a second input to the handler, a preview image corresponding to the size adjusted by the second input instead of the first widget until the second input is released. According to an embodiment, the preview image may include a first template layout based on the adjusted size. According to an embodiment, the first template layout may include a plurality of objects indicating positions where information related to the first application is to be displayed. According to an embodiment, at least one first object among the plurality of objects may be displayed at a fixed size. According to an embodiment, at least one second object among the plurality of objects may be changed in size based on the second input.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately arranged in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201), comprising:
a touch screen (260);
at least one processor (220); and
memory (230) storing instructions that, when executed by the at least one processor, cause the electronic device to:
identify a first input for editing a first widget corresponding to a first application included in a first screen displayed on the touch screen;
in response to the first input, display a handler for adjusting a size of the first widget; and
based on identifying a second input to the handler, display a preview image corresponding to the size adjusted by the second input instead of the first widget until the second input is released,
wherein the preview image includes a first template layout based on the adjusted size,
wherein the first template layout includes a plurality of objects indicating positions where information related to the first application is to be displayed,
wherein at least one first object among the plurality of objects is displayed at a fixed size,
and wherein at least one second object among the plurality of objects is changed in size based on the second input.

2. The electronic device of claim 1, wherein the instructions, when executed by the at least one processor, cause the electronic device to:
based on a type of the first screen, identify a plurality of template layouts supported by the first screen; and
determine the first template layout among the plurality of template layouts based on the first widget.

3. The electronic device of claim 1 or 2, wherein the instructions, when executed by the at least one processor, cause the electronic device to:
when the first screen is identified as a home screen, identify a plurality of first template layouts specified in the home screen;
when the first screen is identified as a lock screen, identify a plurality of second template layouts specified in the lock screen, wherein the plurality of second template layouts are changed in at least part of size, shape, or arrangement with respect to the first template layout based on the lock screen;
when the first screen is identified as a cover screen, identify a plurality of third template layouts specified in the cover screen, wherein the plurality of third template layouts are changed in at least part of size, shape, or arrangement with respect to the first template layout based on the cover screen;
and when the first screen is identified as a watchface screen, identify a plurality of fourth template layouts specified in the watchface screen, wherein the plurality of fourth template layouts are changed in at least part of size, shape, or arrangement with respect to the first template layout based on the watchface screen.

4. The electronic device of any one of claims 1 to 3, wherein the instructions, when executed by the at least one processor, cause the electronic device to:
in response to identifying that the second input is released, display, on the touch screen, the first widget where information provided by the first application is arranged based on the first template layout of the adjusted size.

5. The electronic device of any one of claims 1 to 4,
wherein the first template layout is displayed in a size corresponding to the adjusted size among specified sizes.

6. The electronic device of any one of claims 1 to 5, wherein the instructions, when executed by the at least one processor, cause the electronic device to:
when the adjusted size is smaller than a specific size, display a preview image that does not include the first template layout in response to the second input.

7. The electronic device of any one of claims 1 to 6, wherein the instructions, when executed by the at least one processor, cause the electronic device to:
display the first widget to correspond to a specified size corresponding to a plurality of cells on the first screen.

8. The electronic device of any one of claims 1 to 7, wherein the instructions, when executed by the at least one processor, cause the electronic device to:
perform an out-painting operation on the first widget to enlarge the first widget to the specified size or display a representative color of the first widget or a specified color on an external background of the first widget corresponding to the specified size.

9. The electronic device of any one of claims 1 to 8,
wherein the handler includes lines and a plurality of dots surrounding the first widget,
and wherein the plurality of dots are displayed based on directions in which the size of the first widget is capable of increasing.

10. The electronic device of any one of claims 1 to 9,
wherein the first input includes a long press input to the first widget,
and wherein the second input includes a touch and drag input to the handler.

11. A method of operating an electronic device (201), the method comprising:
identifying a first input for editing a first widget corresponding to a first application included in a first screen displayed on a touch screen (260) included in the electronic device;
in response to the first input, displaying a handler for adjusting a size of the first widget; and
based on identifying a second input to the handler, displaying a preview image corresponding to the size adjusted by the second input instead of the first widget until the second input is released,
wherein the preview image includes a first template layout based on the adjusted size,
wherein the first template layout includes a plurality of objects indicating positions where information related to the first application is to be displayed,
wherein at least one first object among the plurality of objects is displayed at a fixed size,
and wherein at least one second object among the plurality of objects is changed in size based on the second input.

12. The method of claim 11, further comprising:
based on a type of the first screen, identifying a plurality of template layouts supported by the first screen; and
based on the first widget, determining a first template layout among the plurality of template layouts.

13. The method of claim 11 or 12, further comprising:
when the first screen is identified as a home screen, identifying a plurality of first template layouts specified in the home screen;
when the first screen is identified as a lock screen, identifying a plurality of second template layouts specified in the lock screen, wherein the plurality of second template layouts are changed in at least part of size, shape, or arrangement with respect to the first template layout based on the lock screen;
when the first screen is identified as a cover screen, identifying a plurality of third template layouts specified in the cover screen, wherein the plurality of third template layouts are changed in at least part of size, shape, or arrangement with respect to the first template layout based on the cover screen; and
when the first screen is identified as a watchface screen, identifying a plurality of fourth template layouts specified in the watchface screen, wherein the plurality of fourth template layouts are changed in at least part of size, shape, or arrangement with respect to the first template layout based on the watchface screen.

14. The method of any one of claims 11 to 13, further comprising:
in response to identifying that the second input is released, displaying, on the touch screen, the first widget where information provided by the first application is arranged based on the first template layout of the adjusted size.

15. The method of any one of claims 11 to 14,
wherein the first template layout is displayed in a size corresponding to the adjusted size among specified sizes.
